(19) Europäisches Patentamt
European Patent Office
Office européen des brevets

(11) Veröffentlichungsnummer: **0 096 818**
**A1**

(12) **EUROPÄISCHE PATENTANMELDUNG**

(21) Anmeldenummer: **83105558.7**

(22) Anmeldetag: **07.06.83**

(51) Int. Cl.³: **C 08 K 5/52**, C 08 K 5/54, C 08 L 69/00

(30) Priorität: **16.06.82 DE 3222522**

(43) Veröffentlichungstag der Anmeldung: **28.12.83 Patentblatt 83/52**

(84) Benannte Vertragsstaaten: **DE FR GB IT NL**

(71) Anmelder: **BAYER AG, Zentralbereich Patente, Marken und Lizenzen, D-5090 Leverkusen 1, Bayerwerk (DE)**

(72) Erfinder: **Eimers, Erich, Dr., Kreuzbergstrasse 136, D-4150 Krefeld 1 (DE)**
Erfinder: **Dhein, Rolf, Dr., Deswatinesstrasse 30, D-4150 Krefeld 1 (DE)**
Erfinder: **Kircher, Klaus, Dr., Alfred-Kubin-Strasse 3, D-5090 Leverkusen 1 (DE)**

(54) **Stabilisatorkombinationen, ihre Verwendung zur Stabilisierung von thermoplastischen Polycarbonaten sowie stabilisierte, thermoplastische Polycarbonate.**

(57) Gegenstand der vorliegenden Erfindung sind Stabilisatorkombinationen basierend auf speziellen Phosphiten und speziellen Siloxanen, ihre Verwendung zur Stabilisierung von aromatischen, thermoplastischen Polycarbonaten sowie stabilisierte thermoplastische Polycarbonate.

EP 0 096 818 A1

0096818

BAYER AKTIENGESELLSCHAFT 5090 Leverkusen, Bayerwerk

Zentralbereich
Patente, Marken und Lizenzen PS-by-c

# Stabilisatorkombinationen, ihre Verwendung zur Stabilisierung von thermoplastischen Polycarbonaten sowie stabilisierte, thermoplastische Polycarbonate

Gegenstand der vorliegenden Erfindung sind Stabilisatorkombinationen, die dadurch gekennzeichnet sind, daß sie aus Kombinationen von

a) Phosphiten der Formel (I) (a, b, c und/oder d)

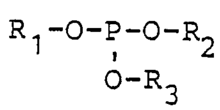

(Ia)

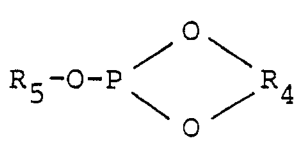

(Ib)

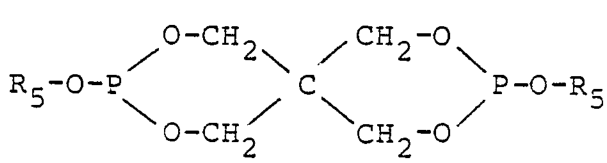

(Ic)

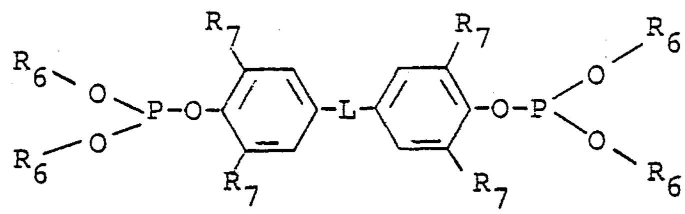

(Id)

mit

b) bei Raumtemperatur (20 °C) flüssigen Siloxanverbindungen der Formel (II)

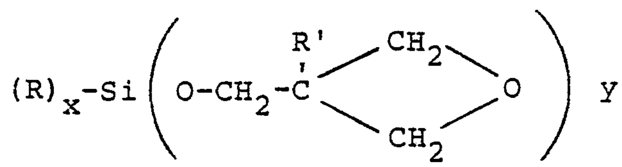

(II)

deren Äquivalentgewicht pro Oxetangruppe unter 180, vorzugsweise unter 160 liegt, bestehen.

Die erfindungsgemäßen Phosphit-Siloxan-Kombinationen können gegebenenfalls noch Siloxane der Formel (III) (a und/oder b) enthalten

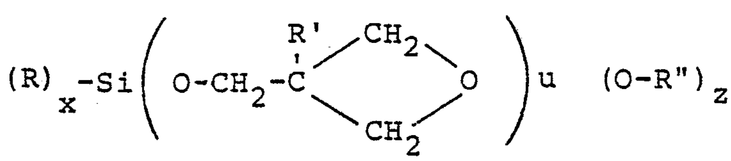

(IIIa),

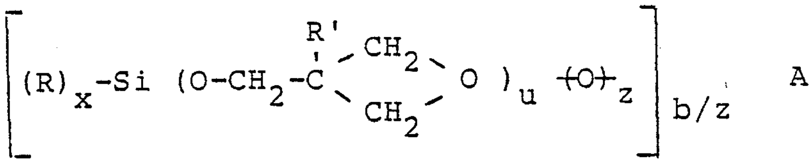 (IIIb),

Das Äquivalentgewicht pro Oxetangruppe der Kombination der erfindungsgemäß geeigneten Siloxane der Formel (II) und der Formel (III) muß ebenfalls unter 180, vorzugsweise unter 160 liegen, d.h., daß auf höchstens 180 g, vorzugsweise auf höchstens 160 g der Mischung aus (II) und (III), ein Grammäquivalent der Oxetangruppe

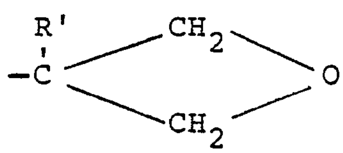 entfällt.

Die Phosphit-Reste

Die Reste $R_1$, $R_2$ und $R_3$ sind lineare oder verzweigte $C_1$-$C_{18}$-Alkyle oder gegebenenfalls substituierte $C_6$-$C_{20}$-Aryle, mit der Maßgabe, daß mindestens einer der Reste $R_1$, $R_2$ oder $R_3$ ein Arylrest, vorzugsweise ein substituierter Arylrest und insbesondere ein ortho-alkylsubstituierter Arylrest ist. Außer den Alkylsubstituenten sind an den Arylresten noch $C_5$-$C_6$-Cycloalkylreste und Phenylreste als Substituenten geeignet.

$R_4$ ist ein $C_2$-$C_5$-Alkylen oder ein zweibindiger Rest eines $C_6$-$C_{30}$-Arylringsystems, wie beispielsweise ein Rest der Formeln

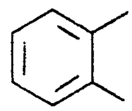

(Ib1)

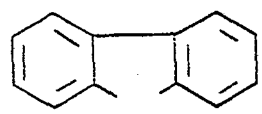

(Ib2)

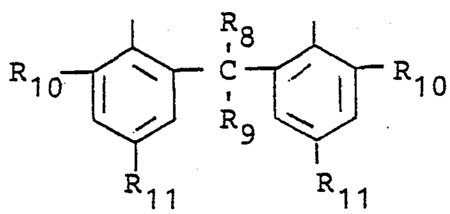

(Ib3) oder

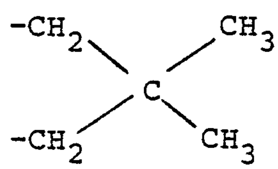

(Ib4).

$R_5$ ist ein lineares oder verzweigtes $C_1$-$C_{18}$-Alkyl, ein $C_5$-$C_{14}$-Cycloalkyl oder ein $C_6$-$C_{20}$-Aryl-Rest, der auch Alkyl- und/oder Hydroxyl-Substituenten enthalten kann, mit der Maßgabe, daß von den möglichen Resten $R_4$ und $R_5$ jeweils mindestens ein C-Atom, das mit dem Sauerstoff der phosphorigen Säure unmittelbar verbunden ist, Bestandteil eines aromatischen Ringes ist.

$R_6$ ist ein substituiertes oder unsubstituiertes $C_6$-$C_{14}$-Aryl, $R_7$ ist H oder $C_1$-$C_4$-Alkyl und L ist -O-, ein $C_1$-$C_6$-Alkyliden oder eine Einfachbindung.

$R_8$ und $R_9$ sind gleich oder verschieden und bedeuten H oder $C_1$-$C_6$-Alkyl; $R_{10}$ und $R_{11}$ sind lineare oder verzweigte $C_1$-$C_6$-Alkyle oder Cyclohexyl.

Die Siloxan-Reste

R ist H oder ein lineares oder verzweigtes $C_1$-$C_{14}$-Alkyl, das Ethersauerstoff-Atome enthalten kann, ein $C_5$-$C_{14}$-Cycloalkyl, das alkylsubstituiert sein kann, oder ein substituiertes oder unsubstituiertes $C_6$-$C_{14}$-Aryl.

R' ist ein $C_1$-$C_6$-Alkyl, ein $C_5$-$C_6$-Cycloalkyl oder ein Phenyl, vorzugsweise ein $C_1$-$C_2$-Alkyl.

R" ist $C_1$-$C_2$-Alkyl oder Aryl, vorzugsweise $CH_3$- oder $C_6H_5$.

In Formel (II) ist "x" 1 oder 2, "y" 2 oder 3 und "x + y" = 4.

In Formel (IIIa) ist "x" 1 oder 2 und "u" Null, 1 oder 2 und "z" 1, 2 oder 3 und "x + u + z" = 4.

Der Rest R" kann beispielsweise auch der Rest eines mehrwertigen aliphatischen Alkohols A sein, woraus Siloxane der Formel (IIIb) resultieren,

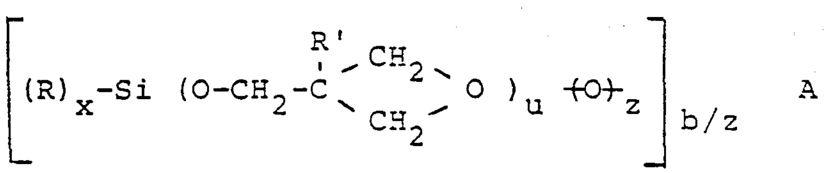

(IIIb),

worin,

R, R', x, u und z die für die Formel IIIa genannte Bedeutung haben und b eine ganze Zahl von 2 bis 6 ist und A somit der Rest eines 2 bis 6 bindigen Alkylens ist.

Die Phosphit-Komponenten und die Siloxan-Komponenten haben einen Siedepunkt von mindestens 250°C.

Das Mischungsverhältnis der erfindungsgemäß einzusetzenden Siloxane zu den erfindungsgemäß einzusetzenden Phosphiten entspricht 1 bis 10 Oxetangruppenäquivalenten, vorzugsweise 4 bis 8 Oxetangruppenäquivalenten, pro Atom Phosphor.

Die Konzentration der Stabilisatorkombination im Polycarbonat liegt zwischen 0,01 und 1 Teilen Kombination pro 100 Teile Polycarbonat.

Die Phosphorgewichtskonzentration im stabilisierten Polycarbonat beträgt 10 bis 200 ppm, vorzugsweise 20 bis 100 ppm.

Gegenstand der vorliegenden Erfindung ist außerdem die Verwendung der erfindungsgemäßen Stabilisatorkombinationen zum Stabilisieren von aromatischen, thermoplastischen Polycarbonaten, in Mengen von 0,01 bis 1 Gew.-%, vorzugsweise von 0,02 bis 0,5 Gew.-% und insbesondere von 0,02 bis 0,3 Gew.-%, bezogen auf Gesamtgewicht an thermoplastischem Polycarbonat und Stabilisatorkombination.

Gegenstand der vorliegenden Erfindung ist außerdem ein Verfahren zum Stabilisieren von aromatischen thermoplastischen Polycarbonaten, das dadurch gekennzeichnet ist, daß man die erfindungsgemäßen Stabilisatorkombinationen während oder nach der Herstellung der thermoplastischen Polycarbonate diesen in bekannter Weise in Mengen von 0,01 bis 1 Gew.-%, bezogen auf Gesamtgewicht an thermoplastischem Polycarbonat und Stabilisatorkombination hinzufügt.

Bevorzugte Gewichtsmengen sind wiederum 0,02 bis 0,5 Gew.-%, insbesondere 0,02 bis 0,3 Gew.-%.

Gegenstand der vorliegenden Erfindung sind außerdem stabilisierte aromatische thermoplastische Polycarbonate, die durch den Zusatz der erfindungsgemäßen Stabilisatorkombination in Mengen von 0,01 bis 1 Gew.-%, bezogen auf Gesamtgewicht an thermoplastischem Polycarbonat und Stabilisatorkombination stabilisiert worden sind.

Bevorzugte Gewichtsmengen sind wiederum 0,02 bis 0,5 Gew.-%, insbesondere 0,02 bis 0,3 Gew.-%.

Die erfindungsgemäße Stabilisierung bewirkt einen Schutz gegen den Einfluß von Wärme und/oder Sauerstoff bei gleichzeitig hoher Hydrolysenstabilität; daneben bewirken die erfindungsgemäßen Stabilisatorkombinationen auch eine höhere Verarbeitungsstabilität.

Es ist allgemein bekannt, daß thermoplastische Kunststoffe zur Verbesserung ihrer Eigenschaften und ihrer Beständigkeit mit verschiedenen Additiven gleichzeitig

konfektioniert werden müssen. Neben Additiven zur Verbesserung der Entformbarkeit, der Flammwidrigkeit sowie der Licht- und Wetterstabilität werden den Thermoplasten vor allem Stabilisatoren zur Verbesserung der Wärme-, Feuchtigkeits- und Luftbeständigkeit zugesetzt. Die Additive enthalten immer eine bestimmte Wirkgruppe, welche für die spezielle Wirkung des Additivs verantwortlich ist. Da demnach meist mehrere Additive nebeneinander eingesetzt werden müssen und da größere Zusatzmengen die physikomechanischen Eigenschaften der Thermoplasten mehr oder weniger stark ungünstig beeinflussen, ist man selbstverständlich bestrebt, zwecks größtmöglichster Reduktion der Zusatzmenge, solche Additive zuzusetzen, die ein möglichst niedriges Äquivalentgewicht, bezogen auf ihre jeweilige Wirkgruppe, aufweisen. Diesem Bestreben sind andererseits dadurch Grenzen gesetzt, daß die Additive möglichst schwer flüchtig sein sollen und deshalb ein möglichst hohes Molgewicht besitzen sollen, damit sie nicht beim Verarbeiten des Thermoplasten oder während oder nach der Verarbeitung wieder herausdiffundieren können.

Aufgabe der Erfindung war es demnach, solche Stabilisatoren gegen den thermooxidativen Abbau von Polycarbonat zu finden, welche diesen allgemeinen Forderungen gerecht werden, d.h. Additive die ein möglichst niedriges Wirkgruppen-Äquivalentgewicht mit möglichst geringer Flüchtigkeit vereinen.

Eine weitere Aufgabenstellung bestand darin, daß die Hydrolysenstabilität des Polycarbonats durch den Zusatz der Stabilisatoren nicht beeinträchtigt werden sollte.

Nun ist es bereits seit langem bekannt, Polycarbonat durch Zusatz von Phosphiten zu stabilisieren. Die Wirkung der Phosphite besteht im wesentlichen aber darin, stark färbende Abbauprodukte, die sich während der Herstellung des Polycarbonats oder bei seiner Verarbeitung bilden, zu ungefärbten Produkten zu reduzieren (Levantowskaja u.a. vysokom. Soed. XIII (1975), S. 2331-37).

Nachteilig ist bei der Phosphitstabilisierung die starke Verbräunung des Substrates bei längerer Einwirkung von Luft und Wärme. Eine Verbesserung der Langzeitstabilität kann durch Zusatz spezieller Phosphite mit Oxetangruppen oder durch Zusatz von Mischungen von Phosphiten mit Oxetanverbindungen (siehe DE-OS 21 40 207 (Le A 13 917), DE-OS 25 10 463 (Le A 16 231) und DE-OS 26 58 849) erfolgen.

Es wurde nun gefunden, daß man besonders günstige Stabilisatorwirkungen dann erzielt, wenn man Kombinationen aus Phosphiten der obengenannten Strukturen (I) mit speziellen oxetangruppenhaltigen Siloxanen der obengenannten Struktur (II) verwendet. Diese Oxetanverbindungen besitzen nämlich einerseits ein relativ niedriges Äquivalentgewicht pro Oxetangruppe und andererseits trotzdem eine relativ niedrige Flüchtigkeit.

Dies zeichnet die hier beanspruchten Silicium-Oxetan-Verbindungen vor den C-Oxetanverbindungen, wie sie z.B. in der DE-OS 25 10 463 (Le A 16 231) beschrieben sind, aus. Zwar sind in der genannten Patentschrift bereits Silicium-Verbindungen in Form von Estern der Kieselsäure mit oxetanhaltigen Alkoholen genannt. Jedoch werden, wie in den Beispielen der vorliegenden Anmeldung gezeigt wird, mit derartigen Kieselsäureester/Phosphit-Gemischen schlechtere Hydrolysenbeständigkeiten erzielt als bei der Verwendung entsprechender Kombinationen von Phosphit/Silicium-Oxetan-Verbindungen der hier beanspruchten Art. Mit Hilfe dieser erfindungsgemäß beanspruchten Stabilisatorkombinationen kann in manchen Fällen die Hydrolysenfestigkeit des unstabilisierten Polycarbonats sogar noch übertroffen werden. Außerdem sind die in der DE-OS 25 10 463 (Le A 16 231) genannten Kieselsäureester der Formel

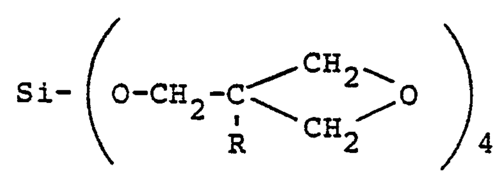

im Falle von R = $CH_3$, $C_2H_5$ feste, kristallisierte Verbindungen. Die Zudosierung solcher Verbindungen zum Polycarbonat, insbesondere während eines kontinuierlichen Herstellungsprozesses ist naturgemäß schwieriger und erfordert zusätzliche verfahrenstechnische Maßnahmen im Gegensatz zur Anwendung der erfindungsgemäßen Siloxane, welche bei Zimmertemperatur flüssig sind.

Obwohl einerseits bekannt ist, daß Silicium-Oxetan-Verbindungen in phosphitfreiem Polycarbonat die Hydrolysenstabilität nicht negativ beeinflussen (siehe DE-OS 29 20 450 (Le A 19 566) und DE-OS 29 20 451 (Le A 19 567)), und obwohl andererseits bekannt ist, daß man durch Zumischen von oxetangruppenhaltigen Carbonsäureestern zu Phosphit-stabilisiertem Polycarbonat (siehe DE-OS 26 58 849) dessen Hydrolysenstabilität verbessern kann, war es trotzdem überraschend, daß mit der hier beanspruchten Kombination derartig hervorragende Ergebnisse in bezug sowohl auf Wärmeoxidationsstabilisierung als auch auf Hydrolysenstabilität erzielt werden können. Aus der DOS 27 26 662 ist nämlich zu ersehen, daß Phosphit-stabilisiertes Polycarbonat durch den Zusatz der dort genannten Siloxan-Verbindungen in seiner Hydrolysenstabilität verschlechtert wird (Beispiel 3 der DE-OS 27 26 662).

Was die phosphitfreie Siloxan-Stabilisierung gemäß DE-OS 29 20 450 (Le A 19 566) bzw. DE-OS 29 20 451 (Le A 19 567) anbetrifft, so hat sich gezeigt, daß der Aufhelleffekt dieser Stabilisierung stark chargenabhängig ist und insbesondere gegen gewisse färbende Abbauprodukte unwirksam ist, die nur durch Reduktionsmittel entfärbt werden können (siehe vorstehend auf Seite 9 dieser Anmeldung erwähnte Phosphitwirkung).

Da im Verlaufe einer kontinuierlichen Großproduktion stets mit gewissen Qualitätsschwankungen innerhalb eines bestimmten Toleranzbereiches zu rechnen ist,

führt die Siloxan-Stabilisierung ohne Phosphit zu schwankenden und daher unbefriedigenden Ergebnissen in bezug auf die Farbhelligkeit des Polycarbonats. Durch die Anwendung der erfindungsgemäßen Stabilisatorlösungen kann dagegen eine völlig gleichmäßige Farbqualität unabhängig von der Charge gewährleistet werden.

Erfindungsgemäß geeignete Phosphite der Formel (I) sind z.B. solche der Formel (Ia) wie

Di-decyl-(2,4-di-tert.-butylphenyl)-phosphit,
Di-dodecyl-(2-tert.-butyl-4-methylphenyl)-phosphit,
Phenyl-bis-(2,6-dimethylphenyl)-phosphit,
Tris-(2,4-di-tert.-butylphenyl)-phosphit,
Tris-(2-cyclohexyl-4-methylphenyl)-phosphit,
Phenyl-bis-(2,6-di-tert.-butyl-4-methylphenyl)-phosphit,
Tris-(nonylphenyl)-phosphit;

außerdem Phosphite der Formel (Ic), worin $R_5$ 2-Methylphenyl, 2-tert.-Butyl-4-methylphenyl, 2,6-Di-tert.-butyl-4-methylphenyl, 2,4-Di-tert.-butylphenyl oder 3,5-Di-tert.-butyl-4-hydroxyphenyl ist;

außerdem Verbindungen der Formel (Ib4), worin $R_5$ Phenyl, o-Toluyl, p-Hydroxyphenyl oder 2,6-Dimethylphenyl ist;

außerdem Verbindungen der Formel (Ib1), worin $R_5$ ein lineares oder verzweigtes $C_1$-$C_{18}$-Alkyl oder ein $C_6$-$C_{14}$-Aryl, das noch Alkyl- und/oder OH-Substituenten haben kann, ist, wie beispielsweise Phenyl, 2,6-Di-tert.-butyl-4-methylphenyl oder $C_{18}H_{37}$- ist;

außerdem Verbindungen der Formel (Ib2), worin $R_5$ Phenyl oder Methyl ist;

außerdem Verbindungen der Formel (Ib3), worin $R_5$ Methyl, Phenyl, 4-Hydroxy-3,5-di-tert.-butylphenyl oder 4-Methyl-3,5-di-tert.-butylphenyl ist;

außerdem Verbindungen der Formel (Id) worin $R_6$ 2,4-Dimethylphenyl, 2,4-Di-tert.-butylphenyl, 4-Methyl-2-tert.-butylphenyl oder 4-Methyl-2-cyclohexylphenyl ist, $R_7$ H oder $CH_3$ ist und L eine Einfachbindung oder Isopropyliden ist wie beispielsweise die folgenden 4 Verbindungen:

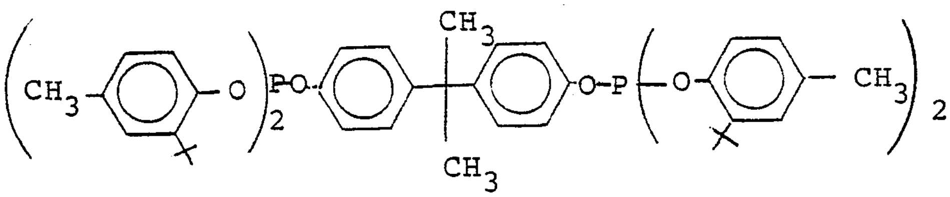

(Id1)

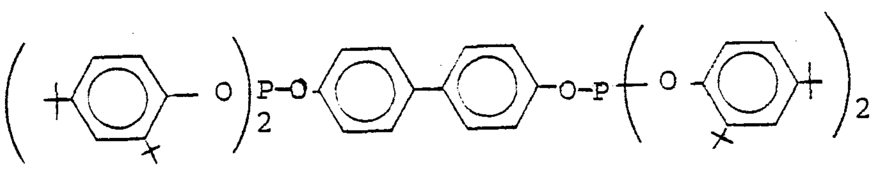

(Id2)

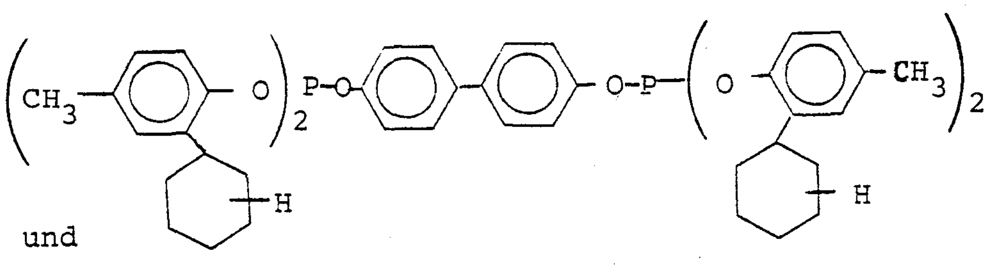

(Id3)

und

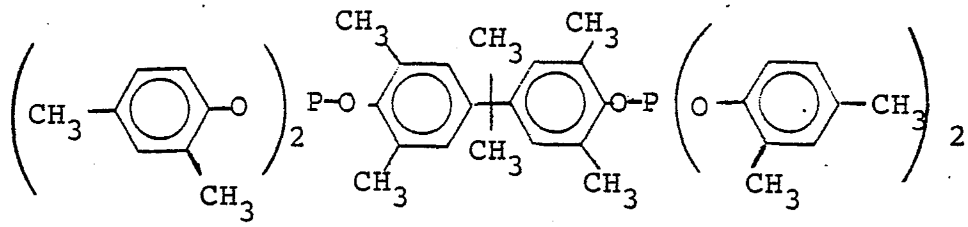 (Id4)

Die erfindungsgemäß geeigneten Phosphite der Formel (I) sind literaturbekannte Verbindungen oder nach literaturbekannten Verfahren herstellbar, beispielsweise gemäß "G. M. Kosolapoff, L. Maier, "Organic Phosphorous Compounds, Bd. 4, Seiten 255 - 462, (1972), oder gemäß DE-AS 21 35 238 oder gemäß DE-OS 20 56 555.

Erfindungsgemäß geeignete Siloxane der Formel (II) sind z.B. die folgenden:

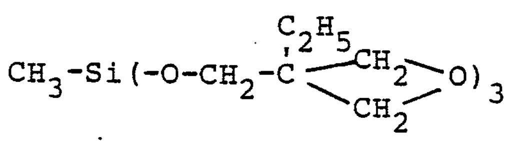 (II,1)

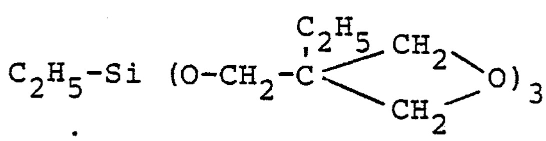 (II,2)

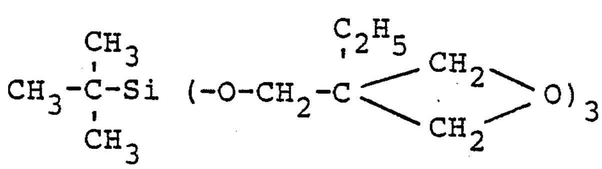 (II,3)

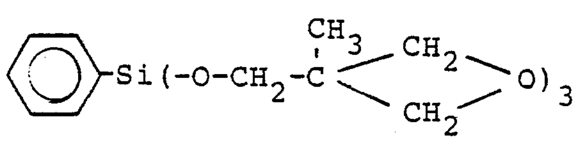 (II,4)

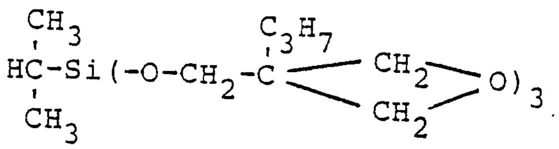 (II,5)

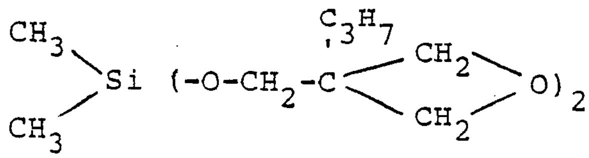 (II,6)

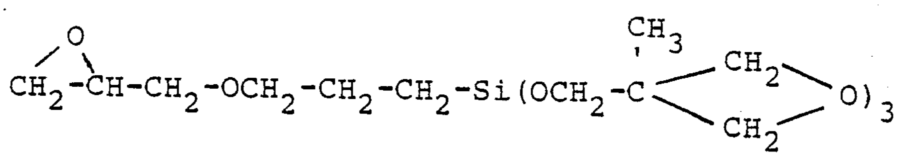 (II,7)

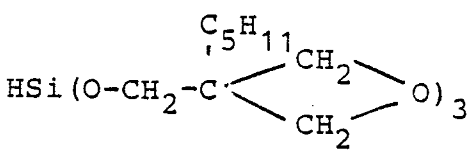 (II,8)

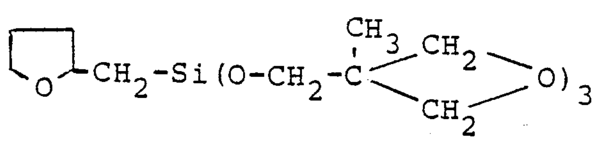 (II,9)

und

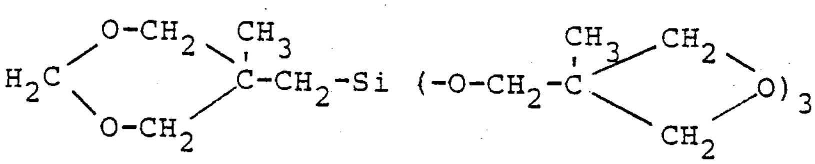 (II,10).

Erfindungsgemäß geeignete Siloxane der Formel (IIIa) sind z.B. die folgenden:

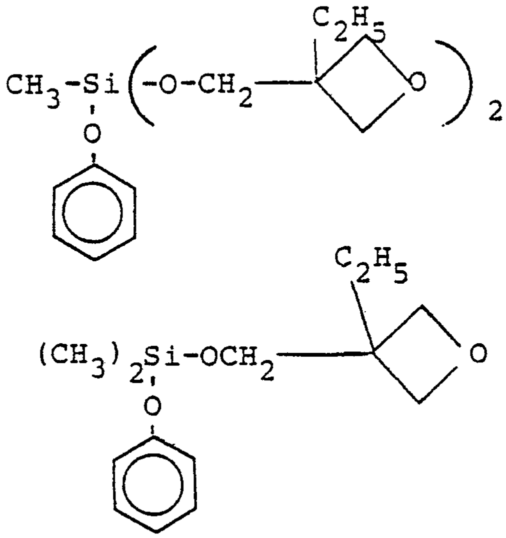

(III,a,1)

(III,a,2)

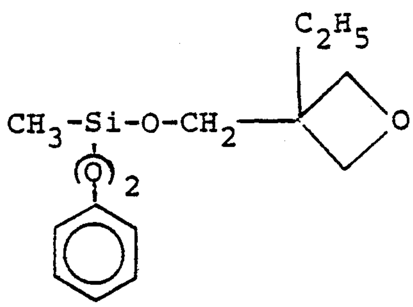

(III,a,3)

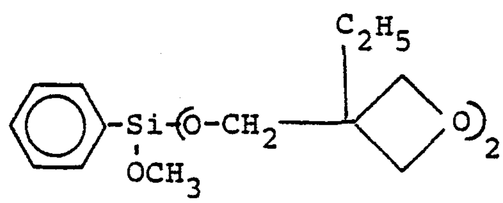

(III,a,4)

Erfindungsgemäß geeignete Siloxane der Formel (IIIb) sind beispielsweise die folgenden:

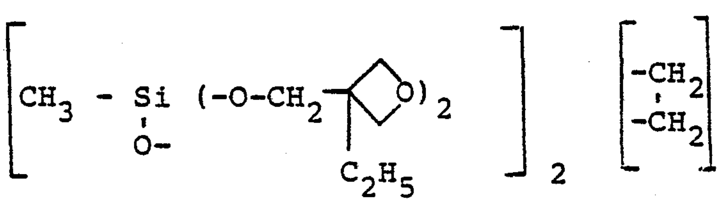

(IIIb,1)

oder

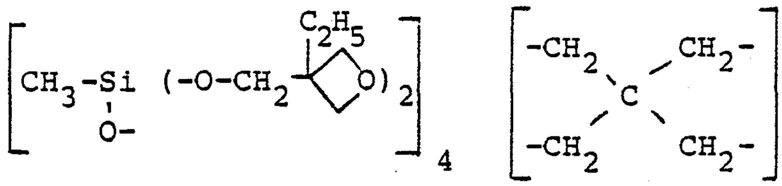 (IIIb,2).

Die erfindungsgemäß geeigneten Siloxane der Formeln (II) und (III) sind literaturbekannt oder nach literaturbekannten Verfahren herstellbar:

Beispielweise durch Umsetzung von Siliciumhalogeniden der Formel (IV)

$$R_xSi(Hal)_y \quad (IV)$$

worin

R,x und y die für die Siloxane der Formel (II) genannte Bedeutung haben, und

Hal Halogen, beispielsweise Chlor bedeutet,

mit Oxetanalkoholen der Formel (V)

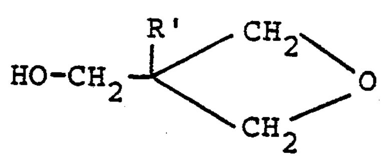 (V),

worin

R' die für die Siloxane der Formel (II) genannte Bedeutung hat,

in Gegenwart säurebindender Mittel, beispielsweise von Triethylamin, N,N-Dimethylanilin oder Natriumacetat und Lösungsmitteln wie Ligroin, Toluol, Tetrahydrofuran oder Diethylether, oder beispielsweise durch Umesterung von Alkoxysilanen oder Phenoxysilanen der Formel (VI)

$$R_x\text{-Si(O-R")}_y \qquad \text{(VI)},$$

worin

R, R" und x die für die Siloxane der Formel (III) genannte Bedeutung haben und

y 2 oder 3 ist,

mit den Oxetanalkoholen der Formel (V) gegebenenfalls in Gegenwart von Katalysatoren, wie beispielsweise Natriumalkoholat, Natriumcarbonat, Kaliumcarbonat, Titantetrabutylat, Dibutylzinnoxid, Zinn(II)-acetat, Zinkacetat oder anderen.

Die erfindungsgemäß einzusetzenden Phosphite der Formel (I) können sowohl einzeln als auch im Gemisch eingesetzt werden. Dies gilt ebenso für die erfindungsgemäß einzusetzenden Siloxane der Formel (II) bzw. für die gegebenenfalls zusätzlich einzusetzenden Siloxane der Formel (III).

Die erfindungsgemäß zu stabilisierenden thermoplastischen aromatischen Polycarbonate sowie ihre Synthese sind bekannt (siehe beispielsweise "H. Schnell, Chemistry and Physics of Polycarbonates, Interscience Publishers, New York, 1964").

Die zu stabilisierenden Polycarbonate sollen mittlere Molekulargewichte $\bar{M}w$ zwischen 10 000 und 100 000, vorzugsweise zwischen 20 000 und 40 000 haben, ermittelt durch Messungen der relativen Viskosität in $CH_2Cl_2$ bei 25°C und einer Konzentration von 0,5 Gew.-%. Die erfindungsgemäß zu stabilisierenden Polycarbonate können linear oder in bekannter Weise verzweigt sein.

Geeignete Diphenole zur Herstellung der thermoplastischen Polycarbonate sind z.B. Hydrochinon, Resorcin, 4,4'-Dihydroxydiphenyl, Bis-(hydroxyphenyl)-alkane, wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner α,α'-Bis-(hydroxyphenyl)-diisopropylbenzol sowie die entsprechenden kernalkylierten bzw. kernhalogenierten Verbindungen.

Bevorzugt sind Polycarbonate auf der Basis von Bis-(4-hydroxyphenyl)-propan-2,2 (Bisphenol A), Bis-(4-hydroxy-3,5-dichlorphenyl)-propan-2,2 (Tetrachlorbisphenol A), Bis-(4-hydroxy-3,5-dibromphenyl)-propan-2,2

(Tetrabrombisphenol A), Bis-(4-hydroxy-3,5-dimethylphenyl)-propan-2,2 (Tetramethylbisphenol A) und Bis-(4-hydroxyphenyl)-cyclohexan-1,1 (Bisphenol Z).

Weitere für die Herstellung von Polycarbonaten geeignete Bisphenole sind beispielsweise in den US-Patenten 3 028 365, 2 999 835, 3 148 172, 2 970 131, 2 991 273, 3 271 367 und 2 999 846 beschrieben.

Die Herstellung der erfindungsgemäßen Stabilisatorkombinationen erfolgt in bekannter Weise durch Lösen der Phosphite in den Oxetanverbindungen in den jeweiligen Mengenverhältnissen, zweckmäßigerweise unter Ausschluß von Luftsauerstoff.

Die erfindungsgemäße Stabilisierung der thermoplastischen Polycarbonate läßt sich auf beliebige Weise, vorteilhaft beispielsweise im Zuge der Herstellung des Polycarbonates durchführen und insbesondere, da es sich um bei niederer Temperatur flüssige Stabilisatoren handelt, kontinuierlich gestalten. Dabei kann die Stabilisatorlösung während der Endphase der Herstellung, in welcher das geschmolzene Polycarbonat kontinuierlich in einer Förderschnecke unter Vakuum vom Lösungsmittel befreit wird, kontinuierlich durch eine geeignete Förderpumpe eingegeben werden. Außerdem können die Komponenten der beanspruchten Stabilisatorkombinationen auch getrennt dem Polycarbonat zugesetzt werden. Selbstverständlich ist es außerdem möglich, das Polycarbonat auch nach der Herstellung mit der beanspruchten Lösung zu stabilisieren, z.B. durch sogenanntes Auftrudeln; diese Methode ist in den Beispielen dieser Anmeldung beschrieben und literaturbekannt.

Die einzusetzenden Mengen an Stabilisatorkombinationen betragen 0,01 bis 1 Gew.-%, vorzugsweise zwischen 0,02 und 0,5 Gew.-% und insbesondere zwischen 0,02 und 0,3 Gew.-%, bezogen jeweils auf Gesamtgewicht an thermoplastischem Polycarbonat und Stabilisatorkombination.

Die erfindungsgemäß stabilisierten Polycarbonate können außerdem die bekannten Zusätze wie beispielsweise Füllstoffe, Farbstoffe, Pigmente und/oder sonstige Stabilisatoren enthalten.

Die erfindungsgemäß stabilisierten thermoplastischen Polycarbonate können auch mit anderen Thermoplasten in bekannter Weise abgemischt werden, beispielsweise mit ABS-Polymerisaten, Polystyrolen, Polyarylensulfonen oder Polyalkylenterephthalaten.

Die erfindungsgemäß stabilisierten Polycarbonate finden besonders dort Anwendung, wo die hergestellten Formkörper einer längeren hohen Wärmebelastung ausgesetzt sind und zudem für alle Gegenstände, für die eine hohe Lichtdurchlässigkeit verlangt wird. Das gilt bevorzugt für die Verwendung auf dem lichttechnischen Sektor, z.B. für Lampenabdeckungen oder Verglasungen mit Polycarbonatplatten.

Die in den Beispielen genannten Teile sind Gewichtsteile.

Herstellung eines Polycarbonats

In einem 3-Halskolben, ausgestattet mit Rührer und Gaseinleitungsrohr, werden 454 Teile 2,2-Bis-(p-hydroxyphenyl)-propan und 2,5 Teile p-tert.-Butylphenol in 1,5 l Wasser suspendiert und anschließend der Sauerstoff aus der Reaktionsmischung entfernt, indem man unter Rühren 15 Minuten lang Stickstoff durch die Reaktionsmischung leitet. Dann werden 355 Teile 45 %iger Natronlauge und 1000 Teile Methylenchlorid zugegeben. Die Mischung wird auf 25°C abgekühlt. Unter Aufrechterhaltung dieser Temperatur durch Kühlen werden 237 Teile Phosgen während einer Zeitdauer von 120 Minuten zugegeben. Eine zusätzliche Menge von 75 Teilen einer 45 %igen Natronlauge wird nach 15 bis 30 Minuten zugegeben bzw. nachdem die Phosgenaufnahme begonnen hat. Zu der entstandenen Lösung werden 1,6 Teile Triethylamin zugegeben und die Mischung weitere 15 Minuten gerührt. Eine hochviskose Lösung wird erhalten, deren Viskosität durch Zugabe von Methylenchlorid reguliert wird. Die wäßrige Phase wird abgetrennt. Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,29 bis 1,30, gemessen in einer 0,5 %igen Lösung von Methylenchlorid bei 25°C. Das entspricht ungefähr einem Molekulargewicht von 32 000. Das so gewonnene Polycarbonat wird extrudiert und granuliert.

Herstellung stabilisierter Polycarbonate

Das gemäß obiger Beschreibung hergestellte granulierte Polycarbonat wird mit den in der nachfolgenden Tabelle aufgeführten Mengen an Stabilisatoren bzw. an Stabilisatorkombinationen durch sogenanntes Auftrudeln vermischt. Danach wird das Granulat bei 300°C in einer Mischschnecke zu einem Strang extrudiert. Dieser Strang wird wiederum zu einem Granulat zerhackt, welches in einem Spritzgußautomaten bei 330°C zu Normprüfstäben verarbeitet wird.

Folgende Stabilisatoren bzw. Stabilisatorkombinationen wurden eingesetzt:

Vergleichsversuche mit:

I. Tris-(-2,4-di-tert.-butylphenyl)-phosphit

II. Tris-(-2-tert.-butyl-4-methylphenyl)-phosphit

III. Mischung aus 1 Mol Tris-(-2-tert.-butyl-4-methylphenyl)phosphit und 1,5 Mol Kieselsäureoctylester

IV. Mischung aus 1 Mol Tris-4-nonylphenyl-phosphit und 5 Mol 3-Amyl-3-hydroxymethyloxetan (gemäß DE-OS 25 10 463 (Le A 16 231)

V. Mischung aus 1 Mol Tris-2-tert.-butyl-4-methylphenyl-phosphit und 1,5 Mol Kieselsäure-tetra-(3-ethyloxetanyl-3)-methylester (gemäß DE-OS 25 10 463).

Versuche mit erfindungsgemäßen Stabilisatorkombinationen:

A) Lösung von 1 Mol Tris-2-tert.-butyl-4-methylphosphit in 2 Mol Methyl-tris-(3-ethyloxetanyl-3)-methoxysilan

B) Lösung von 1 Mol Tris-2,4-di-tert.-butylphenylphosphit und 2 Mol Methyl-tris-(3-ethyloxetanyl-3)-methoxysilan

C) Lösung von 1 Mol 4,9-Bis-(2,4-di-tert.-butylphenyl)-4,9-diphospha-3,5,8,10-tetraoxaspiro-[5,5]-undecan

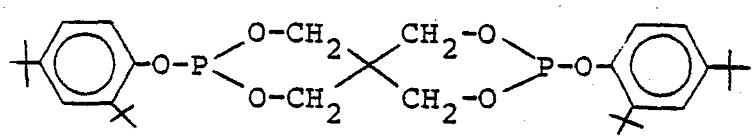

in 4 Mol Ethyl-tris-(3-ethyloxetanyl-3)-methyloxysilan

<u>Wärmealterung</u>

Die in der oben beschriebenen Weise hergestellten Prüfkörper wurden im Trockenschrank bei 140° unter Luftzutritt getempert. Aus den Transmissionskurven, die mit dem Spektralphotometer Zeiss DMC 25 im Bereich von 400-700 nm ermittelt wurden, wurden die angegebenen Transmissionswerte bei 420 nm sowie der Yellowness-Index gemäß ASTM D 1925 ermittelt.

| Stabilisator | Konzentration in Gew.-% | Stunden Temperung | Yellowsness-Index (ASTM D 1925) | Transmission bei 420 nm (DIN 5033 bzw. 4646) |
|---|---|---|---|---|
| ohne Zusatz | | 0 | 6,6 | 78,6 |
| ohne Zusatz | | 1000 | 12,0 | 72,0 |
| I | 0,1 | 0 | 4,0 | 83,9 |
| | | 1000 | sehr starke Verbräunung | |
| II | 0,1 | 0 | 4,0 | 82,8 |
| | | 1000 | 44,0 | 34,5 |
| III | 0,1 | 0 | 4,0 | 84,0 |
| | | 1000 | 15,0 | 68,0 |
| IV | 0,1 | 0 | 4,2 | 81,8 |
| | | 1000 | 8,6 | 74,0 |
| V | 0,1 | 0 | 4,1 | 82,6 |
| | | 1000 | 9,0 | 73,5 |
| A | 0,1 | 0 | 4,4 | 82,0 |
| | | 1000 | 8,5 | 75,1 |
| A | 0,2 | 0 | 3,7 | 83,0 |
| | | 1000 | 8,8 | 74,5 |
| B | 0,1 | 0 | 4,1 | 83,3 |
| | | 1000 | 8,8 | 75,0 |
| B | 0,2 | 0 | 4,1 | 83,8 |
| | | 1000 | 9,0 | 74,1 |
| C | 0,1 | 0 | 4,2 | 81,6 |
| | | 1000 | 9,1 | 74,0 |
| C | 0,2 | 0 | 3,8 | 83,5 |
| | | 1000 | 9,2 | 73,3 |

Hydrolysetest

Eine Anzahl Polycarbonatformkörper, die mit und ohne Stabilisatoren hergestellt worden sind, mit den Abmessungen 50x6x4 mm (sogenannte Normkleinstäbe) werden in einem elektrisch beheizten Rundkolben in siedendem destilliertem Wasser gelagert. Nach Ablauf bestimmter Zeitintervalle werden jeweils 10 Stäbe entnommen und daran die relative Lösungsviskosität (in $CH_2Cl_2$ bei 25° und einer Konzentration von 0,5 Gew.-%) gemessen. Die erhaltenen Durchschnittswerte aus den Einzelmessungen an den 10 Stäben sind in der nachfolgenden Tabelle aufgeführt.

| Stab. | Konzentration in Gew.-% | 250 Stdn. | Kochzeit 500 Stdn. | 750 Stdn. | 1000 Stdn. |
|---|---|---|---|---|---|
| ohne | Zusatz | 1,270 | 1,258 | 1,250 | 1,242 |
| I | 0,1 | 1,210 | 1,174 | - | - |
| II | 0,1 | 1,170 | - | - | - |
| III | 0,1 | 1,260 | - | 1,220 | 1,205 |
| IV | 0,1 | 1,250 | 1,220 | 1,193 | 1,170 |
| V | 0,1 | 1,260 | 1,230 | 1,220 | 1,210 |
| A | 0,1 | 1,268 | 1,265 | 1,262 | 1,256 |
| A | 0,2 | 1,268 | 1,261 | 1,255 | 1,250 |
| B | 0,1 | 1,273 | 1,266 | 1,260 | 1,254 |
| B | 0,2 | 1,270 | 1,260 | 1,250 | 1,245 |
| C | 0,2 | 1,263 | 1,259 | 1,245 | 1,238 |

Hieraus ist ersichtlich, daß der Molekulargewichtsabbau bei der Hydrolyse des erfindungsgemäß stabilisierten

Polycarbonats nicht stärker ist als beim unstabilisierten Material und daß der Abbau deutlich geringer ist als bei einem nur mit Phosphit stabilisierten Polycarbonat.

Patentansprüche

1. Stabilisatorkombinationen, dadurch gekennzeichnet, daß sie aus Kombinationen von

a) Phosphiten der Formel (I) (a, b, c und/oder d)

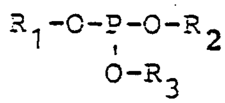

(Ia)

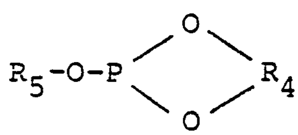

(Ib)

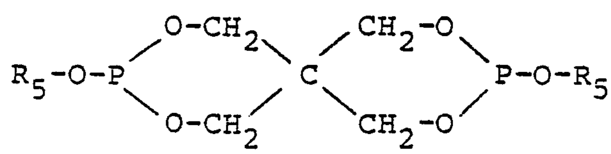

(Ic)

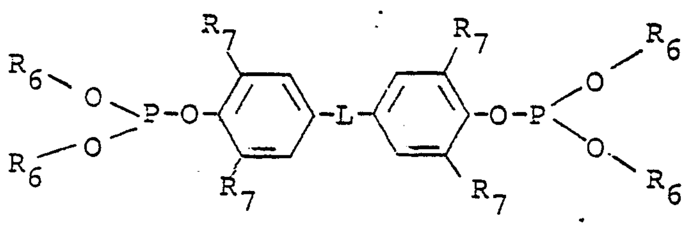

(Id)

mit

b) bei Raumtemperatur flüssigen Siloxanverbindungen der Formel (II)

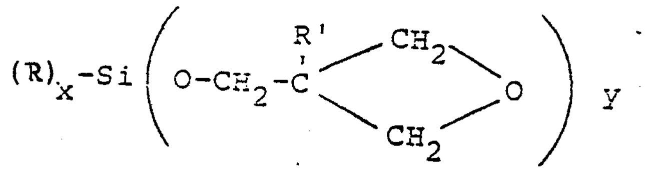 (II)

deren Äquivalentgewicht pro Oxetangruppe unter 180 liegt, bestehen,

worin $R_1$, $R_2$ und $R_3$ lineare oder verzweigte $C_1$-$C_{18}$-Alkyle oder gegebenenfalls substituierte $C_6$-$C_{20}$-Aryle sind mit der Maßgabe, daß mindestens einer der Reste $R_1$, $R_2$ oder $R_3$ ein Arylrest ist,

worin $R_4$ ein $C_2$-$C_5$-Alkylen oder ein zweibindiger Rest eines $C_6$-$C_{30}$-Arylringsystems ist,

worin $R_5$ ein lineares oder verzweigtes $C_1$-$C_{18}$-Alkyl, ein $C_5$-$C_{14}$-Cycloalkyl oder ein $C_6$-$C_{20}$-Aryl-Rest ist, der auch Alkyl- und/oder Hydroxyl-Substituenten enthalten kann, mit der Maßgabe, daß von den möglichen Resten $R_4$ und $R_5$ jeweils mindestens ein C-Atom, das mit dem Sauerstoff der phosphorigen Säure unmittelbar verbunden ist, Bestandteil eines aromatischen Ringes ist,

worin $R_6$ ein substituiertes oder unsubstituiertes $C_6$-$C_{14}$-Aryl ist,

worin $R_7$ H oder $C_1$-$C_4$-Alkyl ist,

worin -L- -O-, ein $C_1$-$C_6$-Alkyliden oder eine Einfachbindung ist,

worin R H oder ein lineares oder verzweigtes $C_1$-$C_{14}$-Alkyl, das Ethersauerstoff-Atome enthalten kann, ein $C_5$-$C_{14}$-Cycloalkyl, das alkylsubstituiert sein kann, oder ein substituiertes oder unsubstituiertes $C_6$-$C_{14}$-Aryl ist,

worin R' ein $C_1$-$C_6$-Alkyl, ein $C_5$-$C_6$-Cycloalkyl oder Phenyl ist,

und worin x 1 oder 2, y 2 oder 3 und x + y = 4 sind,

und wobei das Mischungsverhältnis der Siloxane zu den Phosphiten 1 bis 10 Oxetangruppenäquivalente pro Äquivalent Phosphor entspricht.

2. Stabilisatorkombinationen gemäß Anspruch 1, dadurch gekennzeichnet, daß das Mischungsverhältnis der Siloxane zu den Phosphiten 4 bis 8 Oxetangruppenäquivalente pro Äquivalent Phosphor entspricht.

3. Stabilisatorkombinationen gemäß Anspruch 1 und 2, dadurch gekennzeichnet, daß sie außer Siloxanen der Formel (II) noch Siloxane der Formel (III) (a und/oder b) enthalten

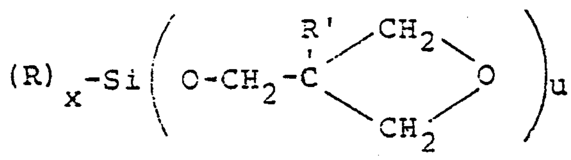

(IIIa),

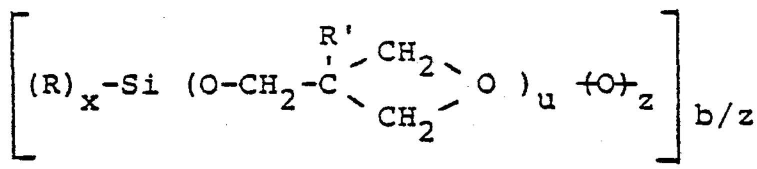

A (IIIb),

wobei das Äquivalentgewicht pro Oxetangruppe der Kombination der Siloxane der Formel (II) und der Formel (III) unter 180 liegt,

worin R, R' und x die in Anspruch 1 für Formel (II) genannte Bedeutung haben und

worin R" $C_1$-$C_2$-Alkyl oder Aryl ist,

worin A der Rest eines 2 bis 6 bindigen Alkylens ist,

worin u Null, 1 oder 2 ist,

worin z 1, 2 oder 3 ist,

worin x + u + Z = 4 ist und

worin b eine ganze Zahl von 2 bis 6 ist.

4. Stabilisatorkombinationen gemäß Ansprüche 1 bis 3, dadurch gekennzeichnet, daß das Äquivalentgewicht pro Oxetangruppe unter 160 liegt.

5. Verwendung der Stabilisatorkombinationen der Ansprüche 1 bis 4 zum Stabilisieren von aromatischen thermoplastischen Polycarbonaten in Mengen von 0,01 bis 1 Gew.-%, bezogen auf Gesamtgewicht an thermoplastischem Polycarbonat und Stabilisatorkombination.

6. Verfahren zum Stabilisieren von aromatischen, thermoplastischen Polycarbonaten, dadurch gekennzeichnet, daß man die Stabilisatorkombinationen der Ansprüche 1 bis 4 während oder nach der Herstellung der thermoplastischen Polycarbonate diesen in bekannter Weise in Mengen von 0,01 bis 1 Gew.-%, bezogen auf Gesamtgewicht an thermoplastischem Polycarbonat und Stabilisatorkombination, hinzufügt.

7. Stabilisierte aromatische, thermoplastische Polycarbonate, dadurch gekennzeichnet, daß sie durch den Zusatz der Stabilisatorkombinationen der Ansprüche 1 bis 4 in Mengen von 0,01 bis 1 Gew.-%, bezogen auf Gesamtgewicht an thermoplastischem Polycarbonat und Stabilisatormischung, stabilisiert worden sind.

Europäisches Patentamt

# EUROPÄISCHER RECHERCHENBERICHT

0096818

Nummer der Anmeldung

EP 83 10 5558

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| A,D | DE-A-2 140 207 (BAYER AG.)<br>* Ansprüche * | 1 | C 08 K 5/52<br>C 08 K 5/54<br>C 08 L 69/00 |
| | --- | | |
| A | US-A-4 102 859 (E. EIMERS et al.)<br>* Ansprüche 8-9 * | 1,5-7 | |
| | --- | | |
| A | EP-A-0 043 998 (BAYER AG.)<br>* Ansprüche * | 1-7 | |
| | ----- | | |
| | | | RECHERCHIERTE SACHGEBIETE (Int. Cl. 3) |
| | | | C 08 K<br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 22-09-1983 | HOFFMANN K.W. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82